Europäisches Patentamt

European Patent Office

Office européen des brevets

(19)

(11) Publication number: **0 089 614**

**A2**

(12) **EUROPEAN PATENT APPLICATION**

(21) Application number: **83102603.4**

(22) Date of filing: **16.03.83**

(51) Int. Cl.³: **B 60 P 1/54**
**B 60 D 1/00, B 60 R 19/00**

(30) Priority: **19.03.82 US 360009**

(43) Date of publication of application:
**28.09.83 Bulletin 83/39**

(84) Designated Contracting States:
**BE DE FR GB IT NL**

(71) Applicant: **Product Group J.V.**
**20276 Mack Avenue**
**Grosse Pointe Woods, MI 48236(US)**

(72) Inventor: **Sybert, Richard Dale c/o Product Group JV**
**20276 Mack Ave.**
**Grosse Pointe Woods, MI 48236(US)**

(74) Representative: **Dipl.-Ing. H. Hauck Dipl.-Phys. W.**
**Schmitz Dipl.-Ing. E. Graalfs Dipl.-Ing. W. Wehnert**
**Dr.-Ing. W. Döring**
**Mozartstrasse 23**
**D-8000 München 2(DE)**

(54) Bumper mounted hoist and movable hitch.

(57) This application discloses a rear bumper assembly for a vehicle having a collapsible hoist mounted in the bumper and provided with an electric winch which is used in conjunction with the hoist to provide a crane when the hoist is erected and to provide a double line winch when the hoist is collapsed. A rearwardly extensible and laterally movable tow bar also is mounted in the bumper.

FIG. 2

EP 0 089 614 A2

# BUMPER MOUNTED HOIST AND MOVABLE HITCH

## Background of the Invention

This invention relates to a step bumper having a three-way movable tow bar and trailer attachment positioned near the center thereof and a collapsible mini-crane or hoist mounted at one end of said bumper. A remote controlled electrically powered winch also is incorporated into the bumper assembly and used in combination with the hoist mast and boom to provide a crane when in erected position and a double line winch when in folded position.

The purpose of an adjustable hitch or tow bar connection is to facilitate connecting up of a vehicle to the object to be towed. Often, because of location or inexpertise, the drive cannot back directly into alignment with the tow bar of the object to be towed. Then it is an advantage to be able to shift the tow bar connection on the towing vehicle into engagement with the tow bar for connecting the two vehicles together. Thereafter, the tow bar connection is locked into traveling position.

There are numerous patents which relate to bumpers which incorporate adjustable trailer hitches. Among these are U. S. patents to Zimmeran 4,060,255 and Meiners 4,159,833 which show laterally shiftable and rearwardly movable hitches. Luinstra (U.S.A.) 3,410,577 shows a hitching device which is laterally swingable and rearwardly movable. Hill (U.S.A.) 3,912,119 shows a device which has a similar range of movements. Casad et al (U.S.A.) 4,007,945 shows a hitch having pull out and pivot features.

There are also numerous patents which show hoist attachments suitable for loading vehicle beds. Among these are U. S. patents to Kenner 3,019,918; Nichols 2,947,425; Hayes 4,241,838; Hawkins 4,069,922; Brookes 3,854,594 and Mann 4,127,200. These lifts or hoists are designed for installation in the bed of a truck or the trunk of a car.

Robinson (U.S.A.) 4,127,295 concerns a power-driven front end mounted winch which is located in the front bumper of a truck and has provisions for rearward as well as forward extension of the cable.

Accordingly, one of the principal objects of the present invention is to provide a full step rear bumper, i.e., a bumper which provides access for the foot of a person to step into the bed of the truck, which houses a movable trailer hitch and a collapsible hoist mast and arm. Another object of the present invention is to provide a remote controlled electrical powered winch unit mounted in a rear bumper which can be utilized as a double line winch. Still another object of this invention is to provide a three-way movable tow bar and trailer attachment mounted in a truck rear bumper. A further object is to provide a truck rear bumper having integrally mounted therein a collapsible hoist mast and boom arm, which, when erected and connected to an electric winch self contained in the bumper, can be used to assist in loading the truck bed, and which can be collapsed and stored in the bumper body for travel.

These and other objects and advantages will become apparent hereinafter.

The present invention comprises a bumper which may contain a three-way adjustable tow hitch, a collapsible hoist and a remote controlled double line electrical winch.

## Description of the Drawings

In the drawings, wherein like numbers refer to like parts wherever they occur:

FIG. 1 is a fragmentary perspective view showing the bumper of this invention mounted on the rear of a pickup truck and showing the tow bar attachment in its retracted position and showing the hoist in carrying position;

FIG. 2 is a fragmentary perspective view showing the tow bar attachment extended rearwardly and showing the hoist in working position;

FIG. 3 is a top plan view of the bumper with the hoist folded into carrying position; and

FIG. 4 is an elevational view from the rear of the bumper showing the hoist in its erect working position.

## Detailed Description

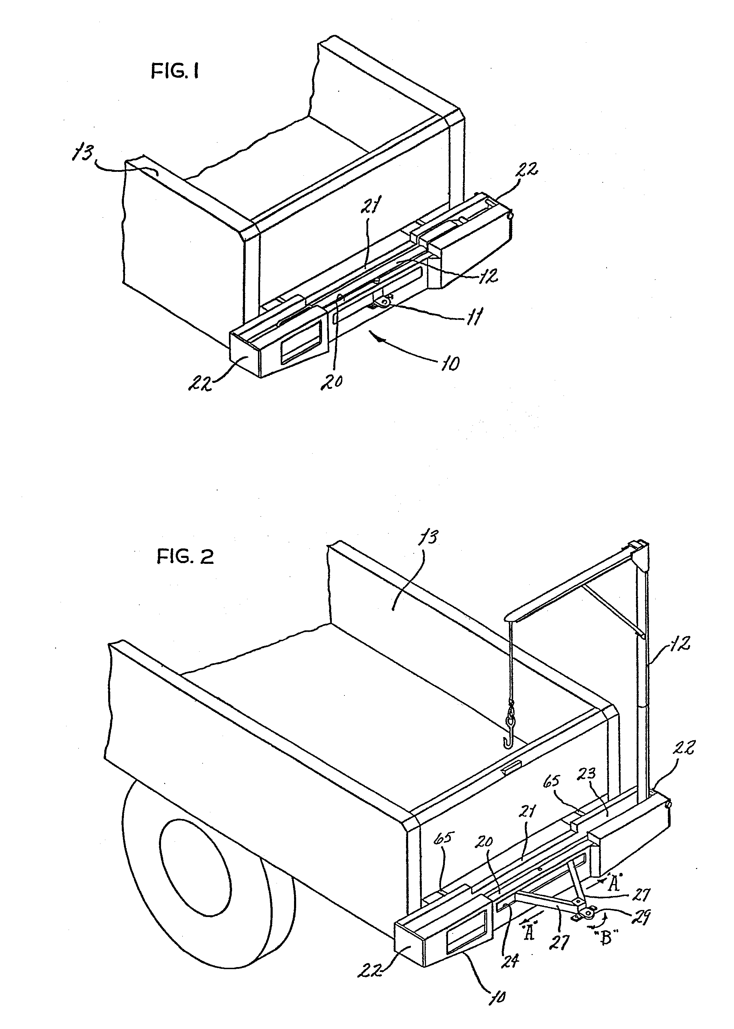

FIG. 1 shows the bumper 10 in traveling position with the hitch 11 and the hoist 12 in retracted and carrying position. The bumper 10 is depicted as mounted on the rear end of a pickup truck 13. However, it can be mounted on any suitable vehicle.

The bumper assembly 10 comprises a body skeleton formed on a main bridge beam 20 positioned at the rear of the bumper 10 and a front bridge tube 21 positioned at the front of the bumper 10. End plates 22 connect the main structural members 20 and 21 at their ends. The open well 23 (FIG. 2) defined by the beams 20 and 21 and the end plates 22 receives the hoist assembly 12 when it is in carrying position.

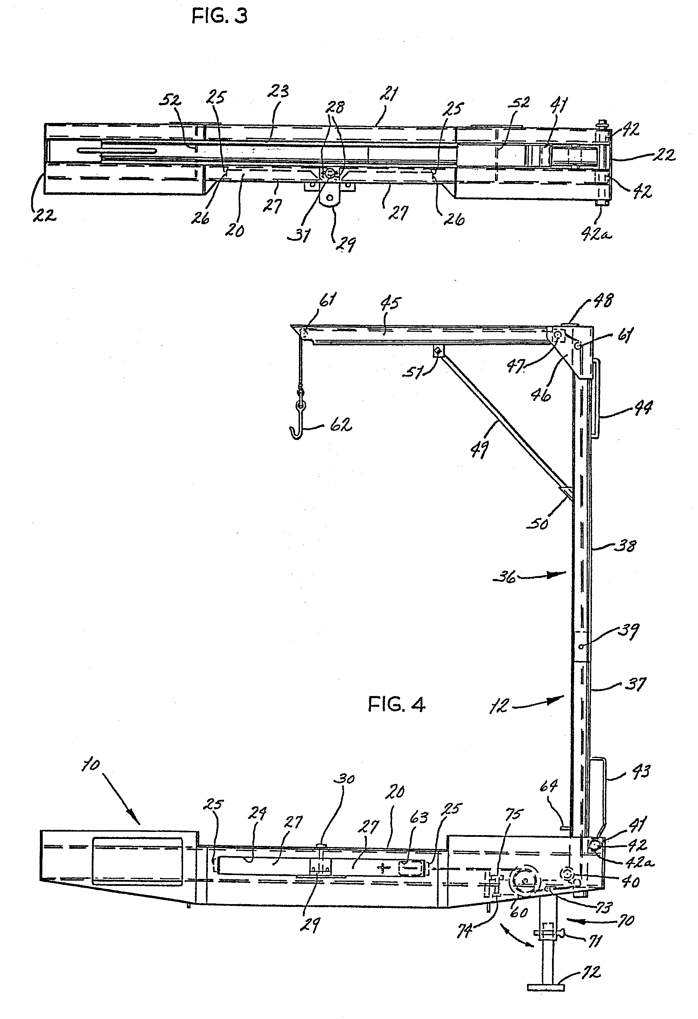

The main beam 20 is a tubular member and is provided with an elongated opening 24 (FIG. 2) in the rear wall. Positioned inside the beam 20 are two slidable pins 25 (FIG. 3) each of which is attached to one end 26 of each of a pair of hitch adjusting arms 27. The other ends of the hitch adjusting arms 27 are pivotally fastened at 28 to opposed sides of a draw bar 29 which is part of the hitch assembly 11 in the embodiment illustrated. It will be appreciated that the hitch assembly 11 can include connections for other types of towing connections, such as, a square receiver (not shown) which is adapted to accommodate pintle hook brackets, a bracket carrying a ball for connection to female sockets, drop bar accessories where the bumper is attached to a high clearance 4-wheel drive truck, and cushion hitch connections of specialty manufacture.

To adjust the hitch assembly 11 rearwardly, the draw bar 29 is pulled rearwardly of the truck body and the pin 25 trapped in the channel defined within the beam 20 slide toward each other as the arms 27 move toward each other and rearwardly (FIG. 2). The extended hitch assembly 11 can be moved as a unit leftwardly and rightwardly in the beam opening 24 to the full extent of the slot 24. This is shown by the arrows "A" in FIG. 2. The draw bar 29 can itself be rotated left or right because of the angled ends of the arms 27 at their connection 28 to the draw bar 29. This is shown by the arrows "B" in FIG. 2.

The adjustment of the hitch assembly 11 left, right, and rearwardly allows easy and quick hook up with a misaligned trailer without extensive maneuvering of the truck 13. When the trailer is connected, the hitch assembly 11 is retracted into the bumper housing and locked in place with a locking pin 30 which passes through the beam 20 and a slot 31 in the draw bar 29.

The bumper assembly 10 also includes various cover plates to strengthen and reinforce the assembly, protect certain functional parts, and to add esthetic appeal to the appearance of the bumper 10.

Positioned at one end of the bumper assembly 10 is the hoist assembly 12. The hoist assembly 12 comprises a two-piece mast 36 formed from a lower mast section 37 and a top mast section 38. The lower mast section 37 and top mast section 38 are mated together and secured by a set screw 39. The nesting of the lower section 37 into the top section 38 allows the upper mast section 38 to be rotated 360°.

The lower mast section 37 is secured to a mast rotator bushing 40 which is pinned to the main bridge beam 20. This allows the mast 36 to move between a carrying position where it resides in the open bumper well 23 (FIG. 3) and an erected position (FIG. 4). A lock bushing 41 is secured to the lower mast section 37 and, when the mast 36 is erected, it is aligned with pin openings 42 in the bumper adjacent to the end wall 22 so that a pin 42a positioned in the openings 42 and the lock bushing 41 locks the mast 36 in an upright operating position.

A pair of handles 43 and 44 positioned on the mast 36 are used to raise the mast 36 from its carrying position to its operating position.

A collapsible boom 45 is pivotally mounted on the free end of the mast 36 by means of a hinge clevis 46. The clevis 46 is fixed to the free end of the mast 36 and the boom 45 is pivoted at 47 thereto. A stop 48 on the clevis 46 keeps the boom 45 from pivoting too far. One end of a support arm 49 fits into a bracket 50 on the upper mast section 38 and the other end is pivotally mounted on the boom 45 at 51.

To collapse the hoist 12, the support arm 49 is lifted out of the bracket 50 and the boom 45 is folded against the mast 36. The pin is removed from the lock bushing 41 and the folded boom and mast are then dropped into the open wall 23 for carrying. In the well 23, the folded mast 36 rests on and is supported by bridging members 52 which span the bottom of the well 23 between the beam 20 and the front tube 21.

An electric winch 60 is mounted on the bumper 10 adjacent to the connection of the mast 36 to the bumper 10.  The line from the winch 60 runs over rollers 61 in the mast 36 and boom 45 terminating in a hook 62 which is on the end of the line which has passed over the roller 61 at the free end of the boom 45.

The winch 60 is designed as double lined and can be pulled through an opening 63 in the rear face of the bumper 10. The free end of the winch line is secured to a fixed bracket 64 on the bumper and the rope is pulled through the opening 63 to form a double line connection to any selected object.  A removable pulley block (not shown) is fastened to the rope after it has been pulled through the opening 63 to provide means for connecting the rope to the object to be winched. The winch 60 preferably is electric and remotely controlled from the cab of the truck.

The bumper 10 is adapted to be mounted on any conventional truck through mounting brackets 65 which are designed to fit the frame of any specific truck body.

Outboard support for the bumper 10 and the truck 13 is provided by a movable, extensible support leg 70 (FIG. 4).  The leg 70 is movable between a carrying position (indicated by the broken lines in FIG. 4) and a support position (indicated by the solid lines in FIG. 4).  The leg 70 is in two parts locked in support position by a pin 71.  At the lowermost part of the leg 70 is a pod 72 which engages the ground or surface on which the truck 13 is resting.  The leg pivots about a pin 73 into carrying position in the underside of the bumper 10.  There it is retained by engagement
of a threaded retainer 74 with a threaded receptacle
75.  The purpose of the leg 70 is to provide outboard
support for the hoist and take the weight of the uneven loading resulting from lifting heavy objects on
the hoist and boom.  This protects the truck suspen-
sion.

WHAT IS CLAIMED IS:

1.

A vehicle bumper comprising:

(a)   a body portion (20) having a track section (24) facing rearwardly when the bumper is affixed to a vehicle,

(b)   a rearwardly and sidewardly movable assembly (25, 27) positioned in and movably along said track section, and

(c)   hitch means (29) positioned on said rearwardly and sidewardly movable assembly and movable therewith in response to movement of said member.

2.

The bumper of claim 1 including a collapsible hoist mounted thereon and movable from a folded traveling position to an erect working position, said hoist having a mast section (36) pivotally mounted at one end to the bumper and a boom section (45) at the other end of said mast and rotatable with respect to said bumper.

3.

The bumper of claim 1 including an electrically operated winch (60) fixed to said bumper.

4.

The bumper of claim 2 including winch means (60) mounted on the bumper and having a line positioned along said mast and boom with a free end (62) suspended from one end of the boom.

5.

The bumper of claim 2 wherein the bumper body
has a recess (23) open to the top thereof which houses
the hoist when the hoist is in its carrying position.

6.

The bumper of claim 2 wherein the hoist mast
is formed of two parts (37, 38) which are relatively rotatable whereby the boom is rotatable through 360°, and
wherein the boom is pivotally connected at one end (46)
to the top of the upper mast section so that it can be
folded against the mast for carrying.

7.

The bumper of claim 2 wherein the hoist is
provided with handles (43, 44) along the uppermost
edge of the mast when the mast is folded into carrying
position in the car, said handles being useful for extending the mast into working position.

8.

The bumper of claim 2 wherein the rearwardly
and sidewardly movable assembly (25, 27) comprises two
arms (27) having rollers (25) one one end which are
trapped in and rollable along the track section (24)
which is channel-shaped, and pivotally connected to a
hitch member (29) at the other ends, the hitch member
having means (31) for trapping a hitch lock pin (30)
passed through the channel and through said hitch member (29).

- 11 -

0089614

9.

A vehicle bumper comprising:

(a)   a body portion (20) defining an opening (23) therein to accommodate a collapsible hoist (36),

(b)   a hoist movable (36) from a folded traveling position to an erect working position, said hoist having a mast section (37, 38) pivotally mounted at one end to the bumper and a boom section (45) at the other end of said mast and rotatable with respect to said bumper, and

(c)   a winch (60) and cable means adapted to be strung over the hoist to provide means for lifting objects.

10.

The bumper of claim 9 including a movable hitch assembly (25, 27) mounted in said bumper.

11.

The bumper of claim 9 including a downwardly movable support leg (70) mounted in said bumper body and movable from a carrying position within said body to a load supporting position beneath said bumper.

12.

The bumper of claim 11 wherein the support leg is extensible and includes means (71) for locking said leg in extended position.

- 12 -

0089614

13.

The bumper of claim 11 including means (74, 75)
for locking said leg (70) in carrying position in said
bumper body.

FIG. I

FIG. 2

FIG. 3

FIG. 4